# EUROPÄISCHE PATENTSCHRIFT

(11) **EP 3 188 951 B1**
(45) Veröffentlichungstag und Bekanntmachung des Hinweises auf die Patenterteilung: **12.09.2018**
(21) Anmeldenummer: 15741168.7
(22) Anmeldetag: 21.07.2015
(51) Int. Cl.: B62D 21/15, B62D 29/00, B62D 25/04

(54) **B-SÄULE**
B PILLAR
MONTANT B

(30) Priorität: 04.09.2014 DE 102014112740
(43) Veröffentlichungstag der Anmeldung: 12.07.2017
(73) Patentinhaber: voestalpine Stahl GmbH, 4020 Linz (AT)
(72) Erfinder: ATZMÜLLER, Peter, A-4020 Linz (AT); POLEDNA, Alexander, A-4020 Linz (AT)
(74) Vertreter: Patronus IP Patent- und Rechtsanwälte
(86) Internationale Anmeldenummer: PCT/EP2015/066633
(87) Internationale Veröffentlichungsnummer: WO 2016/034324

(56) Entgegenhaltungen:
- EP-A1- 1 180 470
- EP-A1- 2 209 696
- DE-A1- 10 041 641
- DE-A1-102005 038 488
- DE-A1-102011 005 977
- US-B2- 6 820 924

## Beschreibung

Die Erfindung betrifft eine B-Säule für ein Kraftfahrzeug.

Bekannte Kraftfahrzeuge besitzen im Aufbau der Fahrgastzelle eine A-, eine B- und eine C-Säule, wobei die B-Säule die mittlere dieser Säulen ist und von einem Schweller an der Unterseite zu einem Dachaufbau an der Oberseite reicht.

Die B-Säule trägt hierbei üblicherweise einen Schließbolzen für die vorderen Türen (Fahrertür, Beifahrertür) und - sofern vorhanden - Scharniere für die hinteren Türen, wobei die Scharniere der hinteren Türen auch an der C-Säule angeordnet sein können, wobei in diesem Fall der Schließbolzen ebenfalls (an der Rückseite) der B-Säule angeordnet ist, ebenso wie bei Schiebetüren im hinteren Bereich.

Die ursprüngliche Aufgabe der B-Säule ist das Halten der Scharniere der hinteren Türen und das Tragen des Schließbolzens der vorderen Türen einerseits und andererseits die Stützung des Dachaufbaus.

Im Rahmen der immer weiter verbesserten Crash-Sicherheit von Fahrgastzellen kommt der B-Säule aber auch eine wesentliche Funktion für die Stabilität der Fahrgastzelle zu.

Es ist seit mehreren Jahren üblich die Fahrgastzellen zunehmend steifer auszubilden und hierfür vergütete Stähle zu verwenden, welche in speziellen Presshärteverfahren oder Formhärteverfahren der Anmelderin geformt und gehärtet werden. Derartige geformte und gehärtete Stahlbauteile und insbesondere B-Säulen besitzen eine sehr hohe Festigkeit von Rm ≈ 1.500 MPa.

In der Vergangenheit hat sich gezeigt, dass durchgängig gehärtete Stahlbauteile für die Fahrgastzelle nicht das Optimum sind. Insbesondere im Crashfall kann es zu Abrissen dieser Bauteile kommen, da sie aufgrund ihrer großen Härte auch eine gewisse Sprödigkeit besitzen und nicht in der Lage sind Energie durch Verformung aufzunehmen sondern viel eher brechen.

Um das Crashverhalten derartiger B-Säulen zu verbessern ist es bekannt, insbesondere den Fuß der B-Säule nicht oder nicht vollständig zu härten, so dass duktilere nachgiebige Bereiche der B-Säule gebildet werden.

Solche B-Säulen sind z. B. aus der EP 1 180 470 A1 und der US 6,820,924 bekannt.

Aus der EP 2 209 696 B1 ist eine B-Säule für ein Fahrzeug bekannt, welche einen oberen Befestigungsbereich zum Befestigen an einem Dachbauteil und einen unteren Befestigungsbereich zur Befestigung an einem Schweller besitzt, wobei der Hauptabschnitt der B-Säule eine im Wesentlichen martensitische Struktur mit einer Zugfestigkeit von mindestens 1.300 MPa und einen weniger festen unteren Bereich der B-Säule mit einer Zugfestigkeit von nicht mehr als 800 MPa besitzt, wobei der weniger feste Bereich eine Höhe von mehr als 30 mm besitzt, sich aber über weniger als 1/3 der vollständigen Höhe der B-Säule erstreckt und so angeordnet ist, dass der untere Befestigungsbereich im Wesentlichen martensitisch ist. Bevorzugt besitzt der weniger feste Bereich eine Höhe, die geringer ist als 1/4 der kompletten Höhe der B-Säule, wobei der weniger feste Bereich eine Höhe zwischen 50 mm und 200 mm besitzt. Bei dieser B-Säule wird der weiche Bereich deutlich beabstandet von einem Befestigungsbereich am Schweller angeordnet. Das relativ enge Band mit der geringeren Festigkeit, welches bevorzugt weniger als 200 mm breit sein soll, ist insbesondere in der unteren Hälfte bevorzugt im untersten Drittel der Säule angeordnet, aber deutlich von der auf dem Schweller aufliegenden Falz der B-Säule entfernt.

Aufgabe der Erfindung ist es, eine B-Säule für ein Kraftfahrzeug crashoptimiert auszubilden.

Die Aufgabe wird mit einer B-Säule mit den Merkmalen des Anspruchs 1 gelöst.

Vorteilhafte Weiterbildungen sind in den Unteransprüchen gekennzeichnet.

Erfindungsgemäß wurde erkannt, dass die aus dem Stand der Technik bekannte Anordnung weicher und harter Zonen keine befriedigende Crasheigenschaft ermöglicht. Insbesondere sind 30 mm, die z. B. in der EP 2 209 696 B1 als Mindestanforderung angegeben sind, ein viel zu schmaler weicher Bereich, um die Crasherfordernisse zu erfüllen. Auch ist die beabstandete Anordnung der weichen Zone zum B-Säulenfuß ungünstig.

Die Erfinder haben herausgefunden, dass ausschließlich der Bereich der B-Säule, der im Bereich des Schwellers liegt, hart ausgebildet sein darf und sich direkt hieran ein weicher Bereich anschließen muss, der von diesem Bereich nicht beabstandet sein darf. Insbesondere bedeutet dies, dass der Schwellerflansch oder die Bereiche des Schwellerflansches der B-Säule, in denen die Schweißpunkte zum Anbinden an den Schweller liegen, hart ausgebildet werden, jedoch der Bereich oberhalb des Schwellerflansches auf jeden Fall weich ausgebildet sein muss.

Hart im Sinne der Erfindung bedeutet eine Zugfestigkeit > 1.400 N/mm², weich im Sinne der Erfindung bedeutet eine Zugfestigkeit < 850 N/mm².

Bei einer Ausführungsform der Erfindung ist bis auf ein schmales Band des Schwellerflansches, in dem die Schweißpunkte liegen, auch der Rest des Schwellerflansches weich, ebenso wie ein über dem Schwellerflansch liegender Bereich von mindestens 100 mm oberhalb der Schwellerfalzkante.

Insbesondere kann der Schwellerflansch selbst bis auf ein schmales Band für die Schweißanbindung weich ausgebildet sein.

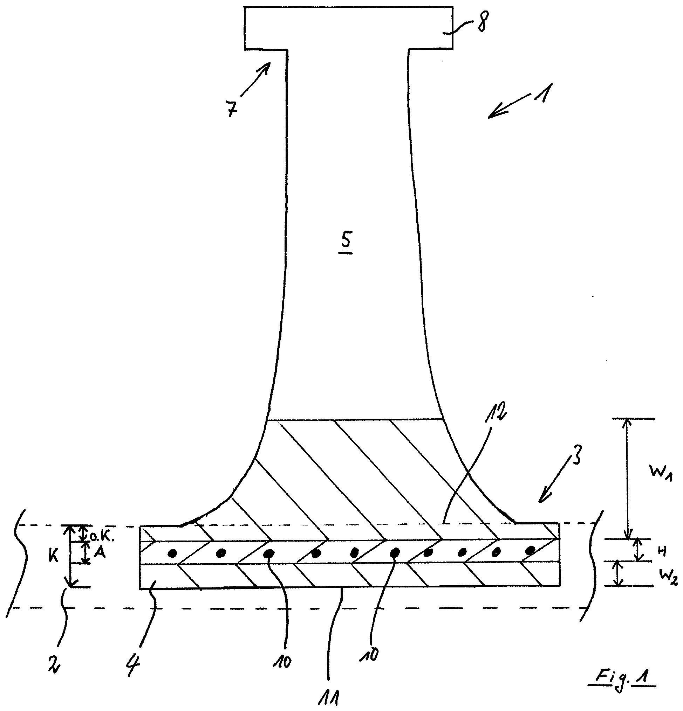

Besonders bevorzugt ist der Bereich unter dem schmalen Band für die Schweißanbindung weich ausgebildet, wie in Figur 1 dargestellt. Vorteilhafterweise ergibt sich im Crashfall eine geringe Belastung für den Schweller.

Die Erfindung wird beispielhaft anhand einer Zeichnung erläutert. Es zeigen dabei:
- Fig. 1:: eine erste Ausführungsform der Erfindung in einer schematischen Ansicht;
- Fig. 2:: eine weitere Ausführungsform der Erfindung in einer schematischen Ansicht;

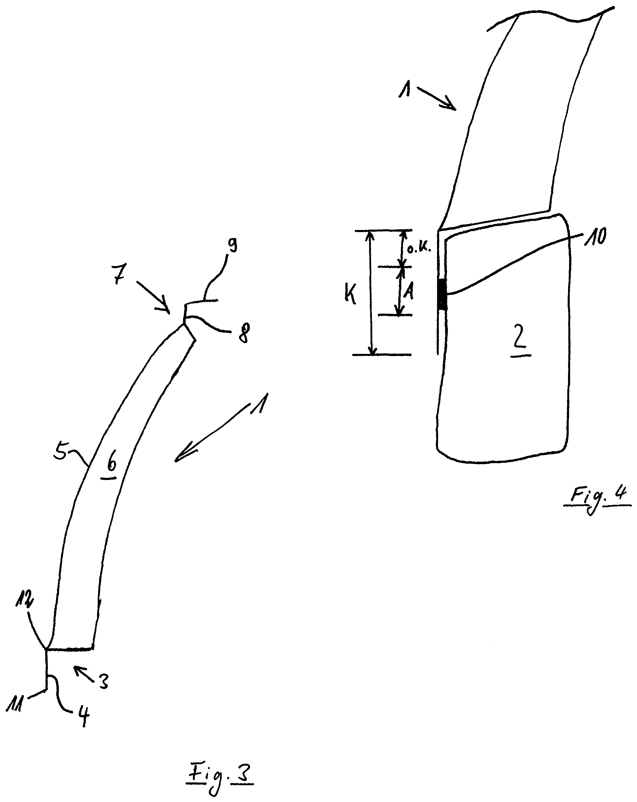

- Fig. 3:: eine B-Säule in einer Seitenansicht;
- Fig. 4:: eine B-Säule an einem Schweller in einer schematischen teilgeschnittenen Ansicht.

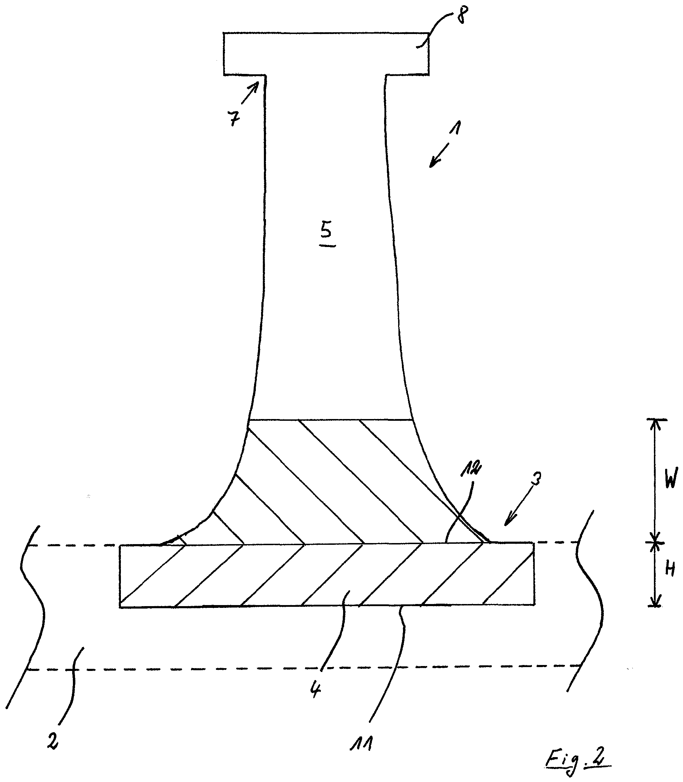

Eine B-Säule 1 ist zur Anordnung zwischen einem Schweller 2 (in Fig. 1 und 2 angedeutet) und einem Dachbereich eines Kraftfahrzeuges (nicht gezeigt) ausgebildet. Hierzu besitzt die B-Säule 1 an ihrem Fuß 3 eine Schwelleranbindung 4 bzw. Verbindungslasche 4, die üblicherweise aus einem ebenen Blechbereich besteht, die jedoch von ihrer Kontur her an die Außenkontur eines Schwellers 2 angepasst ist und welche einem Kontaktbereich K zwischen dem B-Säulenfuss 3 und dem Schweller 2 dient.

Vom Fuß 3 bzw. der Verbindungslasche 4 erstreckt sich die B-Säule kastenartig und zu einem Fahrzeuginneren gewölbt nach oben.

Der kastenartig gewölbte Bereich ist im Querschnitt U-förmig ausgebildet mit einem zum Fahrzeuginneren offenen Bereich einer B-Säulenaußenseite 5 und zwei von der B-Säulenaußenseite 5 abgehenden Flanken 6. In einem Anbindungsbereich an einen Dachbereich, dem Kopf 7 der B-Säule 1, ist eine Verbindungslasche 8 zur Anordnung an einer Dachkonstruktion des Fahrzeuges vorhanden, wobei die Verbindungslasche 8 über zum Fahrzeuginneren weisende Verbindungsstege 9 verfügt.

Die Anordnung der B-Säule 1 an einem Schweller 2 erfolgt üblicherweise über Schweißpunkte 10 im Kontaktbereich K zwischen B-Säule und Schweller, also den Bereich der Verbindungslasche 4, welche die Verbindungslasche 4 mit der Außenseite des Schwellers 2 verbinden.

Die Anbindung des Schwellers mit der B-Säule wird häufig nicht gleichmäßig über den gesamten Kontaktbereich K vorgenommen, sondern insbesondere im Anbindungsbereich A zwischen B-Säulenfuss und Schweller, d.h. der Anbindungsbereich A - in welchem die beispielsweise Schweisspunkte liegen - der einen Teilbereich A des Kontaktbereichs K darstellt.

Eine erfindungsgemäße B-Säule 1 wird im sogenannten Presshärteverfahren hergestellt, wobei eine ebene Platine aus einem härtbaren Stahlblechmaterial entweder kalt zum fertigen Vorformling umgeformt wird, anschließend auf eine Temperatur oberhalb Ac₃ aufgeheizt wird, um das Gefüge des Stahlmaterials zu austenitisieren, und anschließend in einem Formwerkzeug abgeschreckt und dadurch gehärtet wird. Alternativ wird eine ebene Blechplatine aus einem härtbaren Stahlmaterial auf eine Temperatur oberhalb Ac₃ aufgeheizt und damit austenitisiert und anschließend in einem Schritt umgeformt und gehärtet.

Erfindungsgemäß wird jedoch nicht die gesamte Platine gehärtet, sondern es werden im Bereich des Platinenfußes weiche Bereiche ausgebildet.

Um eine optimale Krafteinleitung und einen optimalen Kraftfluss und Kraftschluss zwischen der B-Säule 1 und dem Schweller 2 zu gewährleisten ist zumindest der Bereich der Schwelleranbindung 4, in dem die Schweißpunkte 10 angeordnet werden, hart auszubilden, d. h. hier die Abschreckhärtung durchzuführen (Fig. 1), so dass zumindest im Anbindungsbereich A, d.h. in jenem Bereich, in dem die B-Säule mit dem Schweller 2 verbunden, insbesondere verschweißt wird, ein gehärteter Streifen H (Fig. 1) ausgebildet wird. Unterhalb dieses Streifens bis zu einer Fußkante 11 der B-Säule 1 kann ein weicher Bereich W₂ vorgesehen sein, wobei oberhalb des Streifens H und über eine Falzkante 12 zwischen Kontaktbereich K und Außenseite 5 ein zweiter weicher Bereich W₁ vorhanden ist. Oberhalb des Anbindungsbereiches befindet sich der obere Kontaktbereich oK. Dieser ist eine Teilmenge des gesamten Kontaktbereiches K.

Der Bereich W₁, W muss eine Mindestbreite von 100 mm haben, damit im Crashfall ein energieaufnehmendes Falten der B-Säule ermöglicht wird.

Der gehärtete Bereich des Kontaktbereiches K kann jedoch auch die gesamte Höhe des Kontaktbereiches K zwischen der Kante 11 und der Falz 12 umfassen, insbesondere den Bereich der B-Säule, der sich im Anbindungsbereich A des Schwellers 2 befindet .

Zumindest der Anbindungsbereich A der B-Säule zum Schweller jedoch muss ein gehärtetes Gefüge aufweisen.

Der feste Bereich H (Fig. 2) darf jedoch keinesfalls über den Schwellerbereich, also z. B. die Falzkante 12 hinausragen, da ansonsten ebenfalls das Falten der B-Säule nicht sichergestellt ist. Auch in diesem Fall muss der Bereich W mindestens 100 mm breit sein.

Für die Realisierung der weichen Bereiche stehen dem Fachmann ausreichend viele Möglichkeiten zur Verfügung. Insbesondere kann der weiche Bereich dadurch erzielt werden, dass das Blech in diesem Bereich nicht auf die Austenitisierungstemperatur erhitzt wird, es, wenn es über die Austenitisierungstemperatur erhitzt wurde, in diesem Bereich mit einer Abkühlgeschwindigkeit abgekühlt wird, die unter der kritischen Härtegeschwindigkeit liegt, oder diese Bereiche nach dem Abschreckhärten noch einmal angelassen werden.

Hart im Sinne der Erfindung bedeutet eine Zugfestigkeit > 1.400 N/mm², weich im Sinne der Erfindung bedeutet eine Zugfestigkeit < 850 N/mm².

Bei der Erfindung ist von Vorteil, dass eine B-Säule geschaffen wird, deren weiche Bereiche so angeordnet sind, dass ein optimales Crashverhalten und insbesondere Faltverhalten der B-Säule bei optimalem Kraftfluss in den Schweller gewährleistet ist.

### Bezugszeichenliste:

- 1: B-Säule
- 2: Schweller
- 3: Fuß
- 4: Verbindungslasche
- 5: B-Säulenaußenseite
- 6: Flanke
- 7: Kopf
- 8: Verbindungslasche
- 9: Verbindungsstege
- 10: Schweißpunkte
- 11: Fußkante
- 12: Falzkante

- K: Kontaktbereich
- oK: oberer Kontaktbereich
- A: Anbindungsbereich
- H: gehärteter Streifen
- W: weicher Bereich
- W₁: weicher Bereich
- W₂: weicher Bereich

## Patentansprüche

1. B-Säule eines Kraftfahrzeuges mit einem Fußbereich (3) und einem Kopfbereich (7), wobei im Fußbereich (3) ein Kontaktbereich (K) mit einem Anbindungsbereich (A) zur Anbindung der B-Säule (1) an einen Schweller (2) vorhanden ist, wobei die B-Säule (1) über ihre Höhe von einer Fußkante (11) zu einem B-Säulenkopf (7) harte und weiche Bereiche besitzt, wobei die B-Säule einen weichen Bereich (W₁; W) besitzt, der sich von einem Kontaktbereich der B-Säule (1) zum Schweller (2) zum B-Säulenkopf (7) hin erstreckt und sich hierbei über zumindest 100 mm erstreckt, **dadurch gekennzeichnet, dass** im Kontaktbereich (K) zumindest ein Anbindungsbereich (A), in dem die Fügpunkte zum Schweller (2) angeordnet sind, hart ausgebildet ist, und wobei sich ein zweiter weicher Bereich unter dem Anbindungsbereich der B-Säule zum Schweller (2) zum B-Säulenfuss hin erstreckt.

2. B-Säule nach Anspruch 1, **dadurch gekennzeichnet, dass** sich der weiche Bereich vom oberen Kontaktbereich (oK) der B-Säule zum Schweller (2) zum B-Säulenkopf (7) hin erstreckt.

3. B-Säule nach Anspruch 1 oder 2, **dadurch gekennzeichnet, dass** der weiche Bereich (W₁; W) sich über eine Falzlinie (12) zwischen Kontaktbereich (K) und B-Säulenaußenseite (5) in den Kontaktbereich (K) hinein erstreckt.

4. B-Säule nach einem der vorhergehenden Ansprüche, **dadurch gekennzeichnet, dass** die B-Säule (1) oberhalb des weichen Bereichs (W₁; W) gehärtet ausgebildet ist.

5. B-Säule nach einem der vorhergehenden Ansprüche, **dadurch gekennzeichnet, dass** die harten Bereiche eine Zugfestigkeit > 1.400 N/mm² und die weichen Bereiche eine Zufgestigkeit < 850 N/mm² besitzen.

## Claims

1. B-pillar of a motor vehicle having a foot area (3) and a head area (7), wherein in the foot area (3) a contact area (K) with a connection area (A) for connecting the B pillar (1) to a sill (2) is present, wherein the B-pillar (1) over its height from a foot edge (11) to a B-pillar head (7) has hard and soft areas, wherein the B-pillar has a soft area (W₁, W), which extends from a contact region of the B-pillar (1) to the sill (2) to the B-column head (7) and hereby extends over at least 100 mm,
**characterized in that**
in the contact area (K) at least one connection area (A), in which the joining points to the sill (2) are arranged, is formed hard, and wherein a second soft area extends under the connection area of the B-pillar to the sill (2) to the B-pillar foot.

2. B-pillar according to claim 1, **characterized in that** the soft region extends from the upper contact region (oK) of the B-pillar to the sill (2) to the B-pillar head (7).

3. B pillar according to claim 1 or 2, **characterized in that** the soft region (W₁, W) extends beyond a fold line (12) between the contact area (K) and the exterior side of the B pillar (5) into the contact area (K).

4. B-pillar according to one of the preceding claims, **characterized in that** the B-pillar (1) is formed hardened above the soft region (W₁; W).

5. B-pillar according to one of the preceding claims, **characterized in that** the hard areas have a tensile strength > 1,400 N / mm² and the soft areas have a yield of < 850 N / mm².

## Revendications

1. Montant B d'un véhicule automobile ayant une zone de pied (3) et une zone de tête (7), dans lequel une zone de contact (K) avec une zone de connexion (A) pour relier le montant B (1) à un seuil (2) est présent, dans lequel le montant B (1) présente sur sa hauteur des zones dures et molles du bord de pied (11) à une tête de montant B (7), dans lequel le montant B comporte une zone molle (W₁, W), qui s'étend d'une région de contact du montant B (1) au seuil (2) à la tête de colonne B (7) et qui en l'occurrence s'étend sur au moins 100 mm,
**caractérisé en ce que** dans la zone de contact (K) au moins une zone de raccordement (A), dans laquelle les point d'assemblage sont disposés au seuil (2), est formée de manière rigide, et dans lequel une seconde zone souple s'étend sous la zone de liaison du montant B au seuil (2) au pied du montant B.

2. Montant B selon la revendication 1,
**caractérisé en ce que** la zone molle s'étend de la zone de contact supérieure (oK) du montant B au seuil (2) à la tête du montant B (7).

3. Montant B selon la revendication 1 ou 2, **caractérisé en ce que** la région molle (W₁, W) s'étend au-delà d'une ligne de pliage (12) entre la zone de contact (K) et le côté extérieur du montant B (5) dans la zone de contact (K).

4. Montant B selon l'une quelconque des revendications précédentes, **caractérisée en ce que** le montant B (1) est formé durci au-dessus de la zone molle (W₁; W).

5. Montant B selon l'une des revendications précédentes, **caractérisée en ce que** les zones dures ont une résistance à la traction> 1.400 N / mm² et les zones molles ont un rendement < 850 N / mm².
